# EUROPÄISCHE PATENTSCHRIFT

(11) **EP 1 955 908 B1**
(45) Veröffentlichungstag und Bekanntmachung des Hinweises auf die Patenterteilung: **12.08.2009**
(21) Anmeldenummer: 07122865.4
(22) Anmeldetag: 11.12.2007
(51) Int. Cl.: B60R 21/13

(54) **Überrollschutzsystem für Kraftfahrzeuge mit einem sensorgesteuert aktiv aufstellbaren Überrollkörper**
Rollover protection system for motor vehicles with a sensor-controlled, actively positioned rollover body
Système de protection en cas de tonneaux pour véhicules automobiles comprenant un arceau orientable dirigé par capteur pouvant être placé activement

(30) Priorität: 12.02.2007 DE 102007006768
(43) Veröffentlichungstag der Anmeldung: 13.08.2008
(73) Patentinhaber: ISE Automotive GmbH, 51702 Bergneustadt (DE)
(72) Erfinder: Latussek, Holger, 51702, Bergneustadt (DE)
(74) Vertreter: Fuchs

(56) Entgegenhaltungen:
- EP-A- 0 657 328
- EP-A- 1 736 372
- DE-A1- 3 905 470
- DE-B3-5102004 035 01

## Beschreibung

Die Erfindung bezieht sich auf ein Überrollschutzsystem für Kraftfahrzeuge gemäß dem Oberbegriff des Anspruchs 1.

Derartige Überrollschutzsysteme dienen zum Schutz der Insassen in Kraftfahrzeugen ohne schützendes Dach, typischerweise in Cabriolets oder Roadstern, bei einem Überschlag, damit das Fahrzeug über den aufgestellten Überrollkörper abrollt, der den Insassen einen Überlebensraum bietet.

Es ist dabei bekannt, einen die gesamte Fahrzeugbreite überspannenden, als Teil der Karosserie ausgebildeten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest im Fahrgastraum installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese sogenannten "aktiven" Überrollschutzsysteme weisen typischerweise einen in einem fahrzeugfesten Führungskörper geführten U-förmigen Überrollbügel oder aus einem Profilkörper gebildeten Überrollkörper auf, wobei der Führungskörper in einem Kassetten-Gehäuse, das Seitenteile und ein Bodenteil aufweist, befestigt ist. Dieser Überrollbügel bzw. Überrollkörper wird im Normalzustand gegen die Vorspannkraft mindestens einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in verzahnenden Wirkeingriff tretende Verriegelungseinrichtung, die Wiedereinfahrsperre, ein Zurückdrücken des Überrollbügels verhindert. Dabei ist typischerweise jedem Fahrzeugsitz eine Kassette zugeordnet. Eine derartige Kassetten-Konstruktion eines aktiven Überrollschutzsystems mit einem U-förmigen Überrollbügel zeigt beispielsweise die DE 100 40 649 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Dieses Prinzip weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für zwei nebeneinander angeordnete U-förmige Überrollbügel aufweist, sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Bei all diesen aktiven Überrollschutzsystemen, bei denen auch die Erfindung Anwendung finden kann, ist es notwendig, eine im Gefahrenfall aktivierbare Verriegelungseinrichtung, die Wiedereinfahrsperre, vorzusehen, die im aufgestellten Zustand des Überrollkörpers verhindert, dass dieser aufgrund der bei einem Überschlag auftretenden Kräfte unter Aufgabe des Überlebensraumes in die Kassette oder in die Rückwand-Baueinheit zurückgedrückt wird. Dieser Verriegelungseinrichtung kommt daher eine wesentliche Sicherheitsfunktion zu.

Es sind zahlreiche Konstruktionen für diese Verriegelungseinrichtung bekannt geworden. Sie beruhen überwiegend auf dem Wirkeingriff zweier zueinander komplementärer Zahnelemente. So zeigt die zitierte DE 100 40 649 C1 eine Verriegelungseinrichtung, bestehend einmal aus einem Rastdorn, welcher auf einer beide Schenkel-Enden des zugehörigen U-förmigen Überrollbügels verbindenden, mit ihm ausfahrenden Traverse befestigt ist, und zum anderen aus einer Sperrklinke, die drehbar in dem die Bügel-Schenkel führenden massiven fahrzeugfesten Führungsblock so angelenkt ist, dass sie in verrastendem Wirkeingriff mit dem Rastdorn bringbar ist.
Es sind dabei auch Lösungen bekannt, bei denen die beiden Verriegelungskomponenten umgekehrt angebracht sind, d.h. der Rastdorn am fahrzeugfesten Führungsblock und die Sperrklinke an der mit dem Überrollkörper ausfahrenden Traverse. Auch sind Lösungen mit verzahnten Leisten bekannt.

Bei diesen bekannten Lösungen wird die Verriegelungseinrichtung, abgesehen von dem notwendigen Bauteile- und Montageaufwand weitgehend einseitig, d.h. unsymmetrisch von den Überschlagkräften belastet.

Der enorme Kostendruck in der Automobilindustrie verlangt von den Zulieferfirmen immer stärker kostengünstigere Lösungen. So auch hinsichtlich der Überrollschutzsysteme.

Aus der DE 39 05 470 A1 ist ein gattungsgemäßes Überrollschutzsystem bekannt, bei dem die Verriegelungseinrichtung aus mindestens einem zweiarmigen Hebel für jeden Schenkel eines Überrollbügels vorgesehen ist. Dieser Vorschlag genügt den Anforderungen hinsichtlich einer geforderten Kostensenkung nicht.

Der Erfindung liegt die Aufgabe zugrunde, ein Überrollschutzsystem mit einer sehr einfachen, kostengünstigen Verriegelungseinrichtung gegen ein Wiedereinfahren des Überrollkörpers nach einer unfallbedingten Aufstellung zu schaffen, welches dennoch eine sehr sichere Verriegelung des Überrollkörpers gewährleistet.

Die Lösung dieser Aufgabe gelingt bei einem Überrollschutzsystem für Kraftfahrzeuge, mit einem Überrollkörper, der in einer fahrzeugfesten Halterung geführt aufgenommen ist, mit einem vorgespannten Antrieb zum sensorgesteuerten Aufstellen des Überrollkörpers aus einer Ruhelage in eine Schutzposition, und mit einer Verriegelungseinrichtung für den in der Schutzposition aufgestellten Überrollkörper, gemäß der Erfindung dadurch, dass die Verriegelungseinrichtung aus einer fahrzeugfest drehbar angelenkten und im Verriegelungssinne durch eine Sperrfeder vorgespannten Sperr-Klinkenanordnung mit zwei sich zusammen zumindest über die Breite des Überrollkörpers erstreckenden Armen besteht, wobei die Arme gemeinsam um dieselbe Achse drehbar angelenkt und in der Schutzposition des Überrollbügels in direkten Wirkkontakt mit korrespondierenden Abstützungen am Überrollkörper verschwenkbar sind.

Bei der erfindungsgemäßen Verriegelungseinrichtung erfolgt daher die Verriegelung unmittelbar am Überrollkörper, insbesondere bei einem U-förmigen Überrollbügel an seinen beiden Bügelschenkeln. Wegen der die Breite des Überrollkörpers überspannenden Länge der Klinkenanordnung und des beabstandeten gleichzeitigen Wirkeingriffes der Arme (die man auch als Schenkelarme bezeichnen kann) mit dem Überrollkörper, insbesondere seinen Bügelschenkeln, wird die Verriegelungseinrichtung von den zentral angreifenden Überschlagskräften relativ gleichmäßig belastet. Ferner ist nur eine Klinkenanordnung für die Verriegelung notwendig, was den Bauteile- und Montageaufwand - und damit auch die Kosten - reduziert. Im Fall eines U-förmigen Überrollbügels kann darüber hinaus auf die Traverse samt Rastdorn verzichtet werden. Auch die fahrzeugfeste Halterung des Überrollbügels, der sogenannte, massiv ausgebildete Führungsblock, kann sehr viel einfacher gestaltet werden, da ihm nur noch die Aufgabe zukommt, die Bügelschenkel zu führen. So wäre es denkbar, den Führungsblock durch einfache Rohre mit angeschweißten Flanschen aufzubauen.
Das Auffangen der bei einem Überschlag in der Verriegelungseinrichtung auftretenden Kräfte erfolgt durch eine gezielte Kraftübertragung weitgehend direkt in den Überrollkörper, z.B. in die Bügelschenkel.

Ein besonders großer Vorteil ergibt sich insoweit, wenn die korrespondierenden Abstützungen am Überrollkörper durch seine stirnseitigen unteren Enden gebildet sind, d.h. die Sperrung z.B. bei einem U-förmigen Überrollbügel direkt unter den freien Enden der Schenkelrohre erfolgen kann. Dadurch müssen am Überrollkörper keine besonderen Abstützungen, d.h. Auflager, ausgebildet werden.

Es ist aber auch denkbar, am Überrollkörper, z.B. an der inneren Seite der Bügelschenkel, Öffnungen als Abstützungen vorzusehen, in welche die Arme der Klinkenanordnung einrasten. Diese Öffnungen können partiell verstärkt, aber auch geschwächt werden, wenn beispielsweise als "Überlastschutz" für das Gesamtsystem ein verformender Energieabbau gewünscht ist, bei dem die Arme der Sperr-Klinkenanordnung verformend in die Wandung des Überrollkörpers, z.B. in die Rohrwandung der Schenkelrohre, einschneiden.

Für die konstruktive Ausbildung der doppelarmigen Sperr-Klinkenanordnung sind verschiedene Möglichkeiten gegeben. Eine erste, sehr einfache, kostensparende Möglichkeit besteht darin, nur eine einzige Sperr-Drehklinke mit zwei fluchtend einstückig angesetzten Armen vorzusehen. Die fahrzeugfeste Anlenkung der doppelarmigen Sperr-Drehklinke kann dabei mittig, aber auch außermittig erfolgen, wie in der Figurenbeschreibung noch stärker erläutert werden wird.
Durch die außermittige Anlenkung kann der unterschiedlichen Beanspruchung des Überrollkörpers bei einem Überschlag Rechnung getragen werden. Da z.B. bei einem U-förmigen Überrollbügel das fahrzeugseitig außen liegende Schenkelrohr in der Regel stärker belastet wird, lässt sich durch eine entsprechende asymmetrische Anlenkung ein hinsichtlich der Wechselwirkung zum anderen Schenkelrohr kompensierender Effekt erzielen.

Sollte dabei die eingeleitete Kraft am innen liegenden Bügelschenkel größer als am außen liegenden Schenkel sein, können prinzipiell entsprechende Anschläge auf den Schenkelrohren verhindern, dass das schwächer belastete Schenkelrohr aufgrund der Hebelübersetzung nach oben geschoben wird.

Die Abstützungen bzw. Auflager können höhengleich oder auf unterschiedlichen Höhen am Überrollkörper ausgebildet sein. Für U-förmige Überrollbügel mit Abstützung am stirnseitigen freien Ende der Bügelschenkel können daher die Schenkelrohre gleichlang oder unterschiedlich lang ausgebildet sein.

Die einzige Sperr-Drehklinke kann unterschiedlich geometrisch konfiguriert sein. Bei Abstützungen auf unterschiedlichen Höhen ist die Sperr-Drehklinke vorzugsweise S-förmig geschwungen oder bockwinkelartig ausgebildet, damit ihre Enden horizontal von den Abstützungen aufnehmbar sind und eine gute Krafteinleitung in den Fahrzeug-Aufbau sorgen. Bei höhengleichen Abstützungen ist die Sperr-Drehklinke mit ihren sperrenden Armen vorzugsweise linear erstreckend waagenbalkenartig ausgebildet.

Bei Abstützungen auf unterschiedlichen Höhen kommt die einzige Sperr-Drehklinke in einer diagonalen Lage bei Erreichen der aufgestellten Schutzposition zur Anlage am Überrollkörper. Eine derartig angeordnete Sperr-Drehklinke hat das Bestreben, bei zunehmender Belastung immer mehr in eine waagrechte Lage zu kommen, wodurch sich ein Verstärkungseffekt hinsichtlich der erzielbaren Verriegelungskraft ergibt. Bei U-förmigen Überrollbügeln beispielsweise ergibt sich, je nach Ausbildung der Abstützungen in den Bügelschenkelrohren, entweder eine größere Verklemmung der Sperr-Drehklinke zwischen den Bügelschenkelrohren oder eine sich vergrößernde Auflage- bzw. Abstützfläche stirnseitig unter den freien Enden der Bügelschenkelrohre.

Gemäß einer weiteren Ausgestaltung der Erfindung kann die fahrzeugfest angelenkte Sperr-Klinkenanordnung auch mehrteilig ausgebildet sein, insbesondere durch zwei gegeneinander spreizbare, zweiarmige Sperr-Drehklinken gebildet werden. Hierbei können dann beide Sperr-Drehklinken unabhängig voneinander für die Abstützung des Überrollkörpers bzw. seiner Schenkelrohre verschwenkt werden.

Aufgrund der vorspannenden Sperrfeder liegen die Enden der Arme der Sperr-Klinkenanordnung mit einer gewissen Reibkraft an den zugehörigen Führungen am Überrollkörper, z.B. an den Innenflächen der Schenkelrohre bei einem U-förmigen Überrollbügel, an. Dadurch ist mit Vorteil bei einem pyrotechnischen Antriebssystem keine gesonderte Haltevorrichtung zum Niederhalten des Überrollkörpers notwendig. Die Enden der Schenkelrohre ruhen dabei bodenseitig in einem Schaumkissen, um Klapper- bzw. Schwirrgeräusche während der betrieblichen Fahrten zu vermeiden. Zur Erhöhung der Haltekraft kann das System auch mit Formschluss gehalten werden.

Bei einer Anordnung mit unterschiedlich langen Schenkelrohren kann diese vorteilhaft so getroffen sein, dass als Antrieb zum Aufstellen des Überrollbügels ein Federantrieb mit nur einer Dreh-Schraubenfeder im kürzeren Schenkelrohr vorgesehen ist, welche durch einen Federführungs-Dorn geführt ist und sich bodenseitig in einer Verprägung in einem Schaumkissen abstützt.

Weitere Ausgestaltungen der Erfindung sind in Unteransprüchen gekennzeichnet sowie ergeben sich auch aus der Figurenbeschreibung.

Anhand von zwei in den Zeichnungen dargestellten Ausführungsbeispielen der erfindungsgemäßen Verriegelungseinrichtung wird die Erfindung näher erläutert.

Es zeigen:
- Fig. 1: in einer schematisierten Frontansicht ein Überrollschutzsystem mit einem Überrollbügel, das eine erste Ausführungsform der erfindungsgemäßen Verriegelungseinrichtung in Form einer Sperr-Klinkenanordnung mit einer einstückigen, sich linear erstreckenden zweiarmigen Sperr-Drehklinke aufweist, wobei der Figurenteil A den abgelegten Ruhezustand und der Figurenteil B den in die Schutzposition aufgestellten Überrollbügel zeigt,
- Fig. 2: eine Darstellung entsprechend Fig. 1 mit einer zweiten Ausführungsform der Sperr-Klinkenanordnung, bestehend aus zwei gegenseitig verdrehbaren abgewinkelten Sperr-Drehklinken, die beide in Wirkeingriff mit einem fahrzeugfesten Anschlag bringbar sind, und
- Fig. 3: eine Darstellung entsprechend Fig. 1 mit einer Erhöhung der Haltekraft mit Formschluss.

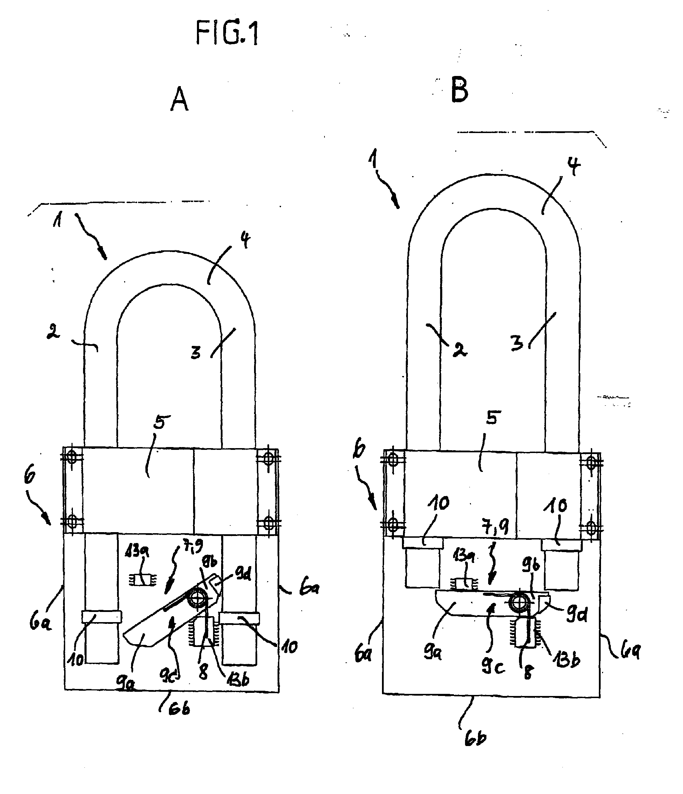

Die Fig. 1 zeigt in zwei Figurenteilen A, B in schematisierten Frontansichten eine erste Variante eines mit der erfindungsgemäßen Verriegelungseinrichtung versehenen aktiven Überrollschutzsystems für Kraftfahrzeuge. Dieses System weist als Überrollkörper einen U-förmigen Überrollbügel 1 auf, der zwei rohrförmige Bügelschenkel oder Schenkelrohre 2, 3 besitzt, die über ein Querjoch in Form eines gerundeten Bügelkopfes 4 miteinander verbunden sind. Die Bügelschenkel oder Schenkelrohre 2, 3 sind in einer fahrzeugfesten Halterung 5, dem sogenannten Führungsblock, der Teil eines kassettenartigen Führungsgehäuses 6 mit Seitenteilen 6 a und einem Bodenteil 6 b ist, geführt aufgenommen.

Derartige Überrollschutzsysteme sind in manigfaltigen Ausführungsformen bekannt geworden, z.B. durch die eingangs zitierte DE 100 40 649 C2 und brauchen daher hier nicht näher erläutert zu werden. Auch ist die Darstellung des Antriebes zum sensorgesteuerten Aufstellen des Überrollbügels aus einer Ruhelage (Figurenteil A) in eine Schutzposition (Figurenteil B), wobei der Antrieb typischerweise durch einen vorgespannten Federantrieb oder einen pyrotechnischen Treibsatz gebildet werden kann, sowie ggf. der Haltevorrichtung zum Niederhalten des Überrollbügels in der Ruhelage, nicht notwendig. Die Ausbildung und Anordnung dieser Komponenten folgt bekannten Grundsätzen.

Damit der aufgestellte Überrollbügel bei einem Überschlag durch die dabei auftretenden Kräfte nicht in das kassettenartige Gehäuse zurückgedrückt werden kann, besitzen die aktiv aufstellbaren Schutzsysteme eine Verriegelungseinrichtung, die sogenannte Wiedereinfahrsperre. Die Fig. 1 zeigt dabei eine erste Variante einer sehr einfachen, kostengünstigen Verriegelungseinrichtung 7.

Als Verriegelungseinrichtung ist prinzipiell eine fahrzeugfest zwischen oder unterhalb der Bügelschenkel 2, 3 drehbar angelenkte, und im Verriegelungssinne durch eine Sperrfeder 8 vorgespannte Sperr-Klinkenanordnung 9 mit zwei sperrenden Armen 9 a, 9 b, welche sich zumindest über die Breite des Überrollbügels erstrecken, vorgesehen. Diese Sperr-Klinkenanordnung 9 ist beim in der Ruhelage abgelegten Überrollbügel (Figurenteil 1 A) so verschwenkt, dass dem Überrollbügel mit seinen beiden Schenkelrohren 2, 3 ein leicht gleitendes und reibungsarmes Ausfahren möglich ist. Im aufgestellten Zustand des Überrollbügels wird die Sperr-Klinkenanordnung aufgrund der vorgespannten Sperrfeder 8 so verschwenkt, dass die sperrenden Endbereiche der beiden Arme 9 a, 9 b in direkten sperrenden Wirkkontakt mit korrespondierenden Abstützungen (oder Auflagern) am Überrollbügel verschwenkbar sind, so dass dadurch eine stabile und sichere Sperre gegen ein Zurückdrücken des Überrollbügels erreicht wird.

Im Fall der in Fig. 1 dargestellten Variante wird die doppelarmige Sperr-Klinkenanordnung 9 durch eine einzige starre, waagenbalkenartige Sperr-Drehklinke 9 c mit zwei fluchtend einstückig starr angesetzten sperrenden Armen 9 a, 9 b gebildet, die außermittig angelenkt ist, so dass die Arme 9 a, 9 b ungleich, d.h. asymmetrisch, ausgebildet sind.

Die Sperr-Drehklinke 9 c ist durch die Sperrfeder 8, die hier als Schenkelfeder ausgebildet ist, im Abstützsinne, d.h. im sperrenden Sinne, vorgespannt.

Die Abstützungen bzw. Auflager an den Bügelschenkeln werden im Fall der Ausführung nach Fig. 1 durch die Stirnflächen der freien Enden der rohrförmigen Bügelschenkel 2, 3 gebildet. Im aufgestellten Zustand liegen die Enden der Sperr-Arme 9 a, 9b unter diesen stirnseitigen Enden der Bügelschenkel und stützen diese im Belastungsfall ab.

Durch die asymmetrische Ausführung der einzigen Sperr-Drehklinke ist es möglich, diese nur einseitig an einem der beiden Bügelschenkel bei abgelegtem Überrollbügel gleitend anliegen zu lassen. Vorzugsweise ist das entsprechende stirnseitige Ende 9 d durch Form und oder Werkstoff gleitend optimiert.
Das gegenüber liegende stirnseitige Ende der Sperr-Drehklinke liegt beim Aufstellvorgang nicht an dem zugehörigen Bügelschenkel an und erzeugt somit auch keine Reibung.
Dadurch ist ein sehr reibungsloses Ausfahren des Überrollbügels gewährleistet.

Zur Begrenzung des Ausfahrhubes des Überrollbügels ist auf beiden Bügelschenkeln ein fester Anschlag 10 aufgebracht.
Dieser Anschlag übernimmt neben der Wegbegrenzung auch zusätzliche Abstützfunktionen in Verbindung mit der Sperr-Drehklinke 9 c.

Bei einem Fahrzeugüberschlag kann nämlich nicht davon ausgegangen werden, dass die Abstützkräfte immer symmetrisch in beide Bügelschenkel des Überrollbügels eingeleitet werden.
Wirken die Kräfte nicht symmetrisch auf den Überrollbügel und kommt es dadurch zu unterschiedlichen Kräften in den Schenkelrohren, entstehen dadurch an den Sperr-Armen der abstützenden Sperr-Drehklinke auch unterschiedliche Drehmomente.

Dies erfolgt aber nur, wenn sich der Bügelkopf 4 auf Grund der Belastung verformt und die Schenkelrohre 2, 3 sich relativ zueinander in axialer Richtung verschieben.
Ist die Belastung sehr unterschiedlich, so dass der Bügelkopf 4 verformt wird, und wirkt die größere Belastung auf das Schenkelrohr 2, welches durch den längeren Arm 9 a der Sperr-Drehklinke abgestützt wird, entsteht an dem kürzeren Sperr-Arm 9 b der Sperr-Drehklinke ein Drehmoment im Sinne "Öffnen" (höhere Kraft X größerer Hebelarm = größeres Moment).
Das Schenkelrohr mit dem größeren Moment würde über die waagenbalkenartige doppelarmige Sperr-Drehklinke dadurch eine größere Reaktionskraft, die aufwärts gerichtet ist, im gegenüber liegenden Schenkelrohr 3 erzeugen.

Diese Kraft wird abgefangen durch den Anschlag 10 auf dem parallel liegenden Schenkelrohr, der an der Führungsgehäuse-Unterseite (Bodenteil 6 b) zur Anlage kommt und damit das "reaktionäre Verlagern" des höher belasteten Schenkelrohres verhindert. Zur Fixierung der horizontalen Lage der linearen Sperr-Drehklinke 9 c dienen auch zwei weitere karosseriefeste Anschläge 13 a, b.

Da in der Praxis typischerweise bei einem Überschlag die der Fahrzeugaussenseite zugewandten Schenkelrohre, hier das Schenkelrohr 3, belastet werden, ist der kurze Hebelarm 9 b der Sperr-Drehklinke 9 c diesem Schenkelrohr 3 zum Minimieren des "reaktionären Verlagerns" zugeordnet.

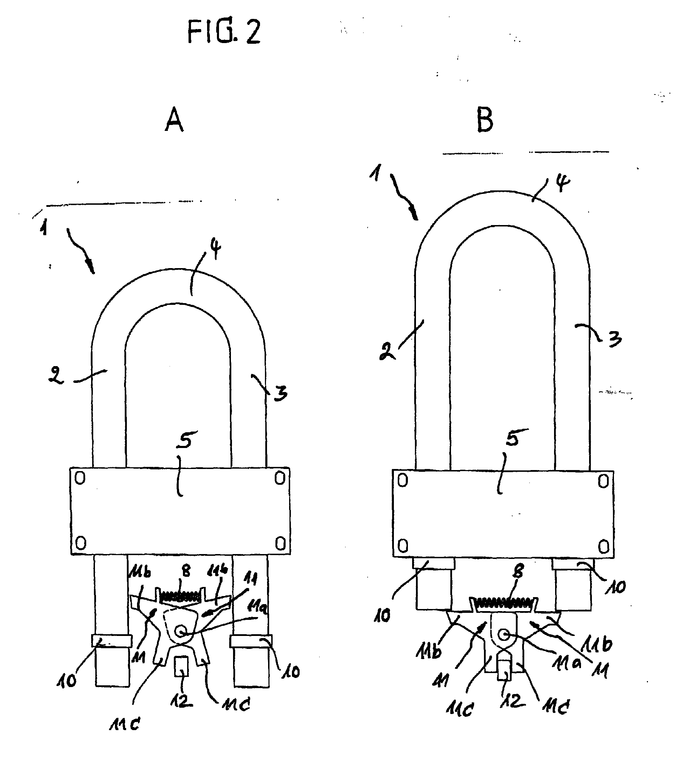

In der Figur 2 ist in zwei Figurenteilen A und B entsprechend Fig. 1 eine weitere Variante für die erfindungsgemäße Verriegelungseinrichtung dargestellt. Bei dieser Variante ist die Sperr-Klinkenanordnung 9 nicht durch eine doppelarmige einstückige, waagenbalkenartige Sperr-Drehklinke wie im Fall der Fig. 1, sondern durch zwei symmetrisch im selben Drehpunkt 11 a angelenkte, gegeneinander verdrehbare Sperr-Drehklinken 11 gebildet. Bei der Variante nach Fig. 2 besitzen die Sperrklinken jeweils zwei abgewinkelte sperrende Arme 11 b und 11 c. Dabei liegt der obere Arm 11 b jeweils, vorgespannt im Sperrsinne durch die Sperrfeder 8, die in dieser Variante als Schraubenfeder ausgebildet ist, an der Innenseite der Bügelschenkel 2, 3 gleitend an (Figurenteil A), währenddessen der andere, untere Arm 11 c nach Erreichen der Stützposition (Figurenteil B) in die Verdrehung sperrenden Wirkkontakt mit einem gemeinsamen fahrzeugfesten Anschlag 12 gelangt. Die Sperrfeder 8 spreizt dabei die Sperr-Drehklinken 11 so gegeneinander, dass die oberen Arme 11 b unter die Stirnseiten der Bügelschenkel 2, 3 gelangen und eine Abwärtsbewegung des Überrollbügels sperren.
Im Belastungsfall stützen sich beide Sperr-Drehklinken 11 mit ihren unteren Armen 11 c an dem gemeinsamen festen Anschlag 12 ab.

Die Belastungsmomente heben sich daher weitgehend gegeneinander auf. Reaktionsmomente wie im Fall der Ausführungsform nach Fig. 1 treten daher bei der Variante nach Fig. 2 nicht auf. Die auf den Bügelschenkeln 2, 3 ausgebildeten Anschläge 10 dienen dann allein der Hubbegrenzung beim Aufstellen des Überrollbügels.

Anstelle eines gemeinsamen, festen Anschlages 12 können auch zwei beabstandet angebrachte fahrzeugfeste Anschläge vorgesehen sein, die jeweils mit dem zugehörigen, komplementär ausgebildeten unteren Sperrarm 11 c der beiden Sperr-Drehklinken 11 in Wirkkontakt treten.

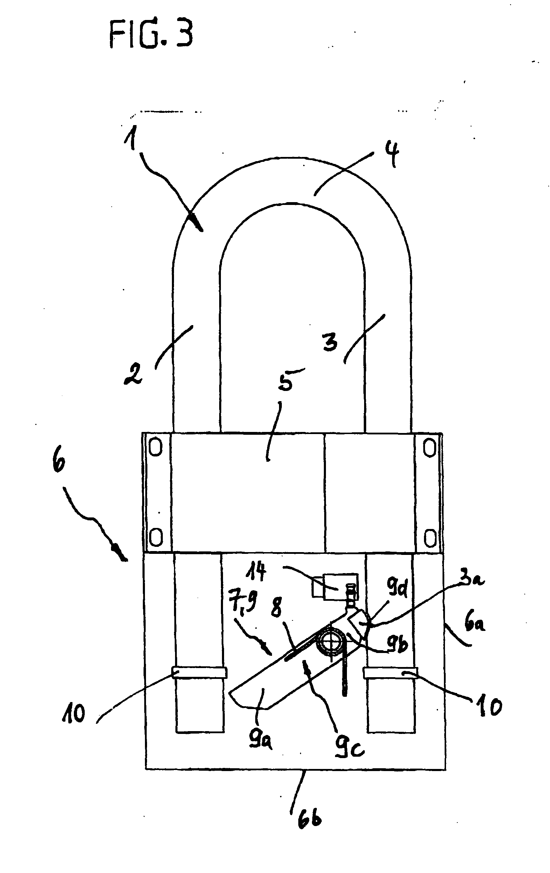

Die Fig. 3 zeigt eine Variante der Ausführungsform nach Fig. 1 im gehaltenen Grundzustand (Figurenteil A), wobei die Anschläge 13 a, b weggelassen sind. Zur Erhöhung der Haltekraft ist eine formschlüssige Halterung zwischen der linearen Sperr-Drehklinke 9 c und dem Überrollbügel 1 vorgesehen. Dazu ist, wie dargestellt, ein Bügelschenkel 3 mit einer tangentialen Einprägung 3 a versehen, in welche der sperrende Arm 9 b der linearen Dreh-Sperrklinke 9 c mit seinem gleitenden Armende 9 d formschlüssig eingreift.

Zum Lösen der formschlüssigen Verbindung ist ein sensorgesteuerter Aktuator 14 vorgesehen, z.B. ein pyrotechnischer Aktuator mit kolbeneinziehender oder-ausstoßender Funktion, der in der Fig. 3 hinsichtlich Aufbau und Anordnung nur symbolisch dargestellt ist. Der im Crash-Fall betätigte Aktuator gibt der Dreh-Sperrklinke 9 c die Möglichkeit des Verschwenkens um einen kleinen Winkel, so dass der vorgespannte Überrollbügel 1 freigegeben wird und ausfahren kann.

### Bezugszeichenliste

- 1: Überrollbügel
- 2, 3: Bügelschenkel (Schenkelrohre)
- 3 a: tangentiale Einprägung
- 4: Bügelkopf
- 5: fahrzeugfeste Halterung (Führungsblock)
- 6: kassettenartiges Führungsgehäuse
- 6 a: Seitenteile
- 6 b: Bodenteil
- 7: Verriegelungseinrichtung
- 8: Sperrfeder
- 9: Sperr-Klinkenanordnung
- 9 a, 9 b: sperrende Arme
- 9 c: lineare Sperr-Drehklinke
- 9 d: gleitendes Armende
- 10: Begrenzungs-Anschlag
- 11: abgewinkelte Sperr-Drehklinken
- 11 a: Drehpunkt
- 11 b, c: abgewinkelte Arme
- 12: fahrzeugfester Anschlag
- 13 a, b: karosseriefeste Anschläge
- 14: sensorgesteuerter Aktuator

## Patentansprüche

1. Überrollschutzsystem für Kraftfahrzeuge, mit einem Überrollkörper (1), der in einer fahrzeugfesten Halterung (5) geführt aufgenommen ist, mit einem vorgespannten Antrieb zum sensorgesteuerten Aufstellen des Überrollkörpers (1) aus einer Ruhelage in eine Schutzposition, und mit einer Verriegelungseinrichtung (7) für den in der Schutzposition aufgestellten Überrollkörper (1), **dadurch gekennzeichnet, dass** die Verriegelungseinrichtung (7) aus einer fahrzeugfest drehbar angelenkten und im Verriegelungssinne durch eine Sperrfeder (8) vorgespannten Sperr-Klinkenanordnung (9; 9 c; 11) mit zwei sich zusammen zumindest über die Breite des Überrollkörpers (1) erstreckenden Armen (9 a, b; 11 b, c) besteht, wobei die Arme (9 a, b; 11 b, c) gemeinsam um dieselbe Achse drehbar angelenkt und in der Schutzposition des Überrollkörpers (1) in direkten Wirkkontakt mit korrespondierenden Abstützungen am Überrollkörper (1) verschwenkbar sind.

2. Überrollschutzsystem nach Anspruch 1, **dadurch gekennzeichnet, dass** die korrespondierenden Abstützungen am Überrollkörper (1) durch seine stirnseitigen unteren Enden gebildet sind.

3. Überrollschutzsystem nach Anspruch 1, **dadurch gekennzeichnet, dass** die korrespondierenden Abstützungen am Überrollkörper durch an ihm ausgebildete Rastöffnungen für die Enden der Arme der Sperr-Klinkenanordnung (9) gebildet sind.

4. Überrollschutzsystem nach einem der Ansprüche 1 bis 3, **dadurch gekennzeichnet, dass** die doppelarmige Sperr-Klinkenanordnung durch eine einzige Sperr-Drehklinke (9 c) mit zwei fluchtend einstückig angesetzten Armen(9 a, 9 b) gebildet ist.

5. Überrollschutzsystem nach Anspruch 4, **dadurch gekennzeichnet, dass** die Sperr-Drehklinke (9 c) mittig oder außermittig fahrzeugfest angelenkt ist.

6. Überrollschutzsystem nach einem der Ansprüche 4 oder 5, **dadurch gekennzeichnet, dass** die Sperr-Drehklinke (9 c) S-förmig geschwungen oder waagenbalkenartig linear erstreckend ausgebildet ist.

7. Überrollschutzsystem nach einem der Ansprüche 1 bis 3, **dadurch gekennzeichnet, dass** die Sperr-Klinkenanordnung (9) durch mindestens zwei gegeneinander spreizbare Sperr-Drehklinken (11) gebildet ist.

8. Überrollschutzsystem nach Anspruch 7, **dadurch gekennzeichnet, dass** beide Sperr-Drehklinken (11) jeweils einen abgewinkelten, oberen Arm (11 b) für einen sperrenden Wirkeingriff mit der zugehörigen Abstützung am Überrollbügel und einen abgewinkelten unteren Arm (11 c) für einen sperrenden Wirkeingriff mit einem fahrzeugfesten Anschlag (12) aufweisen.

9. Überrollschutzsystem nach Anspruch 8, **dadurch gekennzeichnet, dass** für beide abgewinkelten unteren Arme (11 c) ein gemeinsamer fahrzeugfester Anschlag (12) vorgesehen ist.

10. Überrollschutzsystem nach einem der Ansprüche 1 bis 9, **dadurch gekennzeichnet, dass** die Abstützungen höhengleich oder auf unterschiedlichen Höhen am Überrollkörper (1) ausgebildet sind.

11. Überrollschutzsystem nach Anspruch 10 mit einem U-förmigen Überrollbügel (1), bestehend aus einem Bügelkopf (4) mit zwei parallelen Bügel-Schenkelrohren (2, 3), **dadurch gekennzeichnet, dass** die Schenkelrohre (2, 3) gleichlang oder unterschiedlich lang ausgebildet sind.

12. Überrollschutzsystem nach einem der Ansprüche 1 bis 11, **dadurch gekennzeichnet, dass** zum Halten des Überrollkörpers (1) in der Ruhelage eine sensorgesteuert lösbare formschlüssige Verbindung zwischen mindestens einem Armende (9 d) der Sperr-Klinkenanordnung (9) und einer komplementären Aufnahme (3 a) im Überrollkörper vorgesehen ist.

13. Überrollschutzsystem nach Anspruch 12, **dadurch gekennzeichnet, dass** zum sensorgesteuerten Lösen der formschlüssigen Verbindung ein im Crash-Fall aktivierbarer Aktuator (14) vorgesehen ist.

## Claims

1. Rollover protection system for motor vehicles, having a rollover body (1) which is held and guided in a holder (5) fixed to the vehicle, having a biased drive for sensor-controlled deployment of the rollover body (1) from a resting position to a protecting position, and having a locking device (7) for the rollover body (1) when deployed in the protecting position, **characterised in that** the locking device (7) consists of a locking latch arrangement (9; 9 c; 11) which is fixed to the vehicle and pivotally coupled and biased in the locking direction by a locking spring (8) and which has two arms (9 a, b; 11 b, c) extending together over at least the width of the rollover body (1), wherein the arms (9a, b; 11 b, c) are pivotally coupled to pivot together about the same axis and can be swung in the protecting position of the rollover body (1) into direct operative contact with corresponding abutments on the rollover body (1).

2. Rollover protection system according to claim 1, **characterised in that** the corresponding abutments on the rollover body (1) are formed by its lower end faces.

3. Rollover protection system according to claim 1, **characterised in that** the corresponding abutments on the rollover body are formed by detent apertures formed therein for the ends of the arms of the locking latch arrangement (9).

4. Rollover protection system according to any one of claims 1 to 3, **characterised in that** the double-armed locking latch arrangement is formed by a single rotary locking latch (9 c) with two arms (9 a, 9 b) attached in alignment in one piece.

5. Rollover protection system according to claim 4, **characterised in that** the rotary locking latch (9 c) is fixedly coupled to the vehicle centrally or off-centre.

6. Rollover protection system according to either of claims 4 and 5, **characterised in that** the rotary locking latch (9 c) is curved in an "S" shape or extends linearly in the manner of a balance beam.

7. Rollover protection system according to any one of claims 1 to 3, **characterised in that** the locking latch arrangement (9) is formed by at least two splayable rotary locking latches (11).

8. Rollover protection system according to claim 7, **characterised in that** both rotary locking latches (11) have a respective angled upper arm (11 b) for operative engagement in a locking manner with the associated abutment on the roll bar and a respective angled lower arm (11 c) for operative engagement in a locking manner with a stop (12) fixed to the vehicle.

9. Rollover protection system according to claim 8, **characterised in that** a common stop (12) fixed to the vehicle is provided for the two angled lower arms (11 c).

10. Rollover protection system according to any one of claims 1 to 9, **characterised in that** the abutments are formed on the rollover body (1) at the same height or at different heights.

11. Rollover protection system according to claim 10 having a U-shaped roll bar (1) consisting of a bar head (4) with two parallel bar leg tubes (2, 3), **characterised in that** the leg tubes (2, 3) are of equal or differing length.

12. Rollover protection system according to any one of claims 1 to 11, **characterised in that** for holding the rollover body (1) in the resting position a positive connection that is releasable under sensor control is provided between at least one arm end (9 d) of the locking latch arrangement (9) and a complementary receiver (3 a) in the rollover body.

13. Rollover protection system according to claim 12, **characterised in that** for sensor-controlled release of the positive connection an actuator (14) that is activatable in the event of a crash is provided.

## Revendications

1. Système de protection au retournement pour des véhicules à moteur, muni d'un corps de protection au retournement (1) reçu de manière guidée dans un support (5) fixé dans un véhicule, d'un entraînement précontraint pour le déploiement commandé par capteur du corps de protection au retournement (1) d'une position de repos à une position de protection, et de moyens de verrouillage (7) pour le corps de protection au retournement (1) déployé en position de protection, **caractérisé en ce que** les moyens de verrouillage (7) sont constitués d'un agencement à cliquet d'arrêt (9 ; 9c ; 11) qui est articulé de manière pivotante sur le véhicule, et précontraint par un ressort d'arrêt (8) dans un sens de verrouillage, avec deux bras (9a, 9b ; 11b, 11c) s'étendant conjointement au moins sur la largeur du corps de protection au retournement (1), de sorte que les bras (9a, 9b ; 11b, 11c) sont conjointement articulés de manière pivotante autour du même axe et peuvent pivoter dans la position de protection du corps de protection au retournement (1) pour venir en contact actif direct avec des supports correspondants sur le corps de protection au retournement (1).

2. Système de protection au retournement selon la revendication 1, **caractérisé en ce que** les supports correspondants sur le corps de protection au retournement (1) sont formés par ses extrémités inférieures frontales.

3. Système de protection au retournement selon la revendication 1, **caractérisé en ce que** les supports correspondants sur le corps de protection au retournement sont formés par des ouvertures d'encliquetage fabriquées sur celui-ci pour les extrémités des bras de l'agencement à cliquet d'arrêt (9).

4. Système de protection au retournement selon l'une des revendications 1 à 3, **caractérisé en ce que** l'agencement à cliquet d'arrêt à deux bras est formé par un seul cliquet d'arrêt de rotation (9c) avec deux bras (9a, 9b) disposés alignés d'un seul tenant.

5. Système de protection au retournement selon la revendication 4, **caractérisé en ce que** le cliquet d'arrêt de rotation (9c) est articulé sur le véhicule de manière centrée ou excentrée.

6. Système de protection au retournement selon l'une des revendications 4 ou 5, **caractérisé en ce que** le cliquet d'arrêt de rotation (9c) est conçu incurvé en forme de S ou s'étendant linéairement à la manière d'un fléau de balance.

7. Système de protection au retournement selon l'une des revendications 1 à 3, **caractérisé en ce que** l'agencement à cliquet d'arrêt (9) est formé d'au moins deux cliquets d'arrêt de rotation (11) pouvant être écartés l'un de l'autre.

8. Système de protection au retournement selon la revendication 7, **caractérisé en ce que** les deux cliquets d'arrêt de rotation (11) comportent respectivement un bras supérieur coudé (llb) pour une prise active bloquante avec le support associé sur l'arceau de sécurité, et un bras inférieur coudé (11c) pour une prise active bloquante avec une butée (12) fixée sur le véhicule.

9. Système de protection au retournement selon la revendication 8, **caractérisé en ce qu'**une butée commune (12) fixée sur le véhicule est prévue pour deux bras inférieurs coudés (11c).

10. Système de protection au retournement selon l'une des revendications 1 à 9, **caractérisé en ce que** les supports sont conçus à la même hauteur ou à des hauteurs différentes sur le corps de protection au retournement (1).

11. Système de protection au retournement selon la revendication 10 muni d'un arceau de sécurité en forme de U (1), constitué d'une tête d'arceau (4) ayant deux branches tubulaires d'arceau parallèles (2, 3), **caractérisé en ce que** les branches tubulaires (2, 3) sont conçues pour être de longueur égale ou de longueurs différentes.

12. Système de protection au retournement selon l'une des revendications 1 à 11, **caractérisé en ce qu'**un assemblage par complémentarité de forme, démontable, commandé par capteur entre au moins une extrémité de bras (9d) de l'agencement à cliquet d'arrêt (9) et un logement complémentaire (3a) dans le corps de protection au retournement est prévu pour maintenir le corps de protection au retournement (1) dans la position de repos.

13. Système de protection au retournement selon la revendication 12, **caractérisé en ce qu'**un actionneur pouvant être activé en cas d'accident (14) est prévu pour la libération commandée par capteur de l'assemblage par complémentarité de forme.
